# EUROPÄISCHE PATENTSCHRIFT

(11) **EP 0 621 410 B1**
(45) Veröffentlichungstag und Bekanntmachung des Hinweises auf die Patenterteilung: **20.08.1997**
(21) Anmeldenummer: 94110337.6
(22) Anmeldetag: 12.10.1989
(51) Int. Cl.: F16C 3/02, F16C 7/02, F16C 3/10, F16C 3/18

(54) **Verbundhohlkörper**
Hollow composite member
Corps creux composite

(30) Priorität: 03.11.1988 DE 3837293
(43) Veröffentlichungstag der Anmeldung: 26.10.1994
(62) Teilanmeldung aus: 89118952.4
(73) Patentinhaber: Emitec Gesellschaft für Emissionstechnologie mbH, 53797 Lohmar (DE)
(72) Erfinder: Swars, Helmut, D-51429 Bergisch Gladbach (DE)
(74) Vertreter: Manderla, Thomas, Dr.

(56) Entgegenhaltungen:
- EP-A- 0 068 424
- EP-A- 0 212 130
- DE-A- 3 128 744
- FR-A- 2 536 131
- GB-A- 1 162 022
- US-A- 2 306 960
- US-A- 3 844 730

## Beschreibung

Die Erfindung betrifft einen Verbundhohlkörper zur Aufnahme von Drehmomenten und/oder Zug-, Druck- oder Biegekräften, wobei in einer äußeren Materialschicht durch in senkrechter Richtung zur Längsachse druckaufnehmende innere Stützmittel im wesentlichen über die gesamte axiale Länge eine jeweils über dem Umfang gleichmäßige Zugvorspannung in Umfangsrichtung herrscht.

Verbundhohlkörper sind beispielsweise aus der EP-A- 0 212 130 bekannt, bei der ein Armierungszylinder auf ein Rohrstück so aufgebracht wird, daß im Rohrstück eine Druckvorspannung und im Armierungszylinder eine Zugvorspannung bestehen bleibt. Der Armierungszylinder besteht hierbei vorzugsweise aus einem Faserverbundwerkstoff und das Ineinanderschieben der beiden Teile wird durch elastische Verformung im Sinne eines Aufweitens des Armierungskörpers und eines radialen Zusammendrückens des Rohrkörpers ermöglicht, wobei beim Ausgleich die kraftschlüssige Verbindung zustande kommt.

Aus der EP-A-0 068 424 ist ein Pleuel bekannt, das aus zwei Lagerhülsen und einem zwischen den Lagerhülsen angeordneten Steg besteht.

Die drei Teile werden durch eine unter Zugbelastung stehende Schlaufe zusammengehalten. Die Schlaufe wird mit eingesetzten Lagerhülsen derart elastisch aufgeweitet, daß der Steg eingeschoben werden kann. Nach Entspannung der Schlaufe ist der Steg auf Druck und die Schlaufe auf Zug belastet.

Weiter ist aus der DE-A-3 128 744 eine Kurbelwelle bekannt, bei der eine Kurbelwange aus sich überlappenden Bereichen eines Lagerzapfens und eines Hubzapfens, einem Gegengewicht und Füllstücken besteht. Die Einzelteile sind duch eine Wickelbandage, deren Ausdehnung in axialer Richtung der Breite der Kurbelwange entspricht, fest gegeneinander gespannt.

Der vorliegenden Erfindung liegt die Aufgabe zugrunde, verschiedene Elemente in Form von Verbundhohlkörpern bereitzustellen, die sich bei leichter Bauweise durch hohe Festigkeit auszeichnen und dabei leicht herstellbar sind.

Diese Aufgabe wird durch einen Verbundhohlkörper nach Anspruch 1 oder 2 gelöst. Nach einer Ausführungsform bilden an der äußeren Schicht mehrere über Teilumfänge anliegende Ring- oder Hülsenkörper in Verbindung mit dazwischenliegenden Formkörpern, die Stützmittel. Die hiermit zu erzeugenden Körper sind für Anwendungsfälle geeignet, bei denen der Querschnitt des Hohlkörpers nicht rund ist, wobei ein bevorzugtes Beispiel in Pleuelstangen zu sehen ist. Es werden hierbei mehrere runde bzw. ovale Hülsen in einen die äußere Kontur vorgebenden Körper eingesetzt, die dann mit an sich bekannten Mitteln plastisch aufgeweitet werden. Die zwischen der äußeren Schicht und den inneren Hülsen liegenden Zwischenräume sind durch mehrere Formkörper, welche Gleitfugen untereinander mit einem Winkel zur Richtung der Rückfederungskraft, der eine Selbsthemmung bewirkt, aufweisen können, ergänzt, die jeweils äußersten entgegengesetzten Hülsen können unmittelbar als Pleuelaugen Verwendung finden.

Damit ergibt sich beim Aufweiten eine relativ geringe Kraft zur Verformung der Stützmittel und nach dem Aufweiten eine sehr große Stützwirkung. In der die äußere Kontur vorgebenden Schicht entsteht eine gleichmäßige Zugvorspannung, während die inneren Hülsen unter Druckvorspannung stehen. Das vorgespannte Material des Hohlkörpers ergibt bei leichter Bauweise hohe Formstabilität.

Nach einer weiteren bevorzugten Ausführung, die sowohl Verbundhohlkörper mit rundem Querschnitt als auch solche mit unrundem Querschnitt betreffen kann, sind zwischen der äußeren Schicht und einer oder mehreren innenliegenden Hülsen sich gegeneinander durch Selbsthemmung abstützende Klemmkörper vorgesehen, wobei das plastisch umgeformte Material der innenliegenden Schicht oder der Hülsen eine geringere Streckgrenze aufweisen kann, als das der äußeren Schicht. Durch plastisches Aufweiten werden hierbei die nach außen gegeneinander gleitend verschiebbaren, sich nach innen durch Selbsthemmung und damit Verhinderung des Rückgleitens abstützenden Klemmkörper in ihrer Lage so verändert, daß sie an der Aufrechterhaltung der Vorspannung in der äußeren Schicht durch ihre große Druckfestigkeit entscheidend teilhaben. Die inneren plastisch verformte Materialschicht fixiert die Klemmkörper sicher in der aufgeweiteten Position.

Als bevorzugte Werkstoffe für die äußere Schicht kommen Materialien mit hoher Zugfestigkeit und hoher Streckgrenze infrage, beispielsweise Vergütungsstähle, Federstähle, Titan oder Faserverbundwerkstoffe. Als Werkstoffe für die Hülsen, die plastisch verformbar sein und eine geringere Streckgrenze aufweisen müssen, sind entsprechend ausgewählte Baustähle, Kohlenstoffstähle oder Nichteisenmetalle vorzuschlagen. Die äußere Schicht und die inneren Hülsen können jeweils ihrerseits aus mehreren Lagen mit nach außen zunehmender Festigkeit bestehen. Die Klemmkörper der Zwischenschicht sind vorzugsweise aus Keramik oder einem drucksteifen hartem Werkstoff vorzusehen, wobei auch spröde Werkstoffe möglich sind. Durch die bleibende Vorspannung zwischen äußerer und innerer Schicht wird ein Haftschluß auch zwischen den einzelnen Lagen erzeugt. Durch den Haftschluß ist es möglich, die äußere Schicht und/oder die inneren Hülsen aus mehreren axialen Einzelabschnitten aufzubauen, wobei bei einem Vorliegen von Trennfugen in der inneren Hülse und äußeren Schicht diese axial weit genug voneinander versetzt sein sollen. Der Verbundhohlkörper ist hierdurch aus kürzeren Hülsenstücken aufzubauen. Die Wandstärken der Verbundschichten bzw. die Festigkeitskennwerte bei aus Einzelabschniten axial zusammengesetzten Hohlkörpern können in Längsrichtung abgestuft werden, so daß sich mit unterschiedlichem Aufweitdrücken nacheinander wirkend oder mit gleichem Aufweitdruck gleichzeitig wirkend eine unterschiedliche axiale und radiale Vorspannung ergibt, wobei letztere in einzelnen Querschnitten jeweils etwa gleichmäßig ist.

Das plastische Aufweiten der jeweils inneren Hülsen ist durch innere Drückaufgabe, die quasistatisch oder pulsierend oder in explosionsartiger Entfaltung erfolgen kann, bevorzugt gegen die Abstützung einer äußeren Form, das heißt eines Gesenkes vorzunehmen. In dieser Form ist dabei ein Aufweitspiel vorzusehen, wobei vor Erreichen der Elastizitätsgrenze die Außenschicht sich an der sehr stabilen Wandung anlegen soll, so daß der Aufweitdruck nicht eng begrenzt werden muß.

In die jeweils inneren Hülsen können zusätzliche Stützmittel in Form von Querböden oder dergleichen eingepreßt oder eingeformt sein, die beispielsweise im Bereich von Querschnittssprüngen für eine erhöhte radiale Steifigkeit sorgen.

Die jeweils in den inneren Hülsen und äußeren Schicht aufrechterhaltene Vorspannung kann auch durch andere Fügeverfahren, insbesondere thermisches Fügen (Schrumpfen, Wachsen) oder durch reine axiale Preßverbindung erzeugt werden, wobei das Verhältnis der Streckgrenzen der Materialien von innerer und äußerer Schicht in der Bedeutung zurücktritt.

Bevorzugte Ausführungsbeispiele und das Umfeld der Erfindung sind in den Zeichnungen beschrieben:
- Fig. 1a: zeigt einen Verbundhohlkörper im Querschnitt,
- Fig. 1b: zeigt einen Hohlkörper nach Fig. 1a im Längsschnitt
- Fig. 2a: zeigt einen erfindungsgemäßen Verbundhohlkörper vor dem Aufweiten im Querschnitt,
- Fig. 2b: zeigt einen erfindungsgemäßen Verbundhohlkörper nach einer weiteren Lösung vor dem Aufweiten im Querschnitt,
- Fig. 2c: zeigt einen Hohlkörper nach Fig. 2a nach dem Aufweiten im Querschnitt,
- Fig. 2d: zeigt einen Hohlkörper nach Fig. 2b nach dem Aufweiten im Querschnitt,
- Fig. 3a: zeigt einen erfindungsgemäßen Verbundhohlkörper als Kurbelwelle im Längsschnitt,
- Fig. 3b: zeigt einen Hohlkörper nach Fig. 3a in einem ersten Querschnitt in einer ersten Aufsführung,
- Fig. 3c: zeigt einen Hohlkörper nach Fig. 3a in einem zweiten Querschnitt in einer ersten Ausführung,
- Fig. 3d: zeigt einen Hohlkörper nach Fig. 3a in einem ersten Querschnitt in einer zweiten Aufsführung,
- Fig. 3e: zeigt einen Hohlkörper nach Fig. 3a in einem zweiten Querschnitt in einer zweiten Ausführung.

In Fig. 1a ist ein runder Hohlkörper mit einer äußeren Hülse 1 gezeigt, die aus mehreren nicht näher bezeichneten Lagen besteht, an die sich innen unmittelbar eine innere Hülse 2 anlegt.

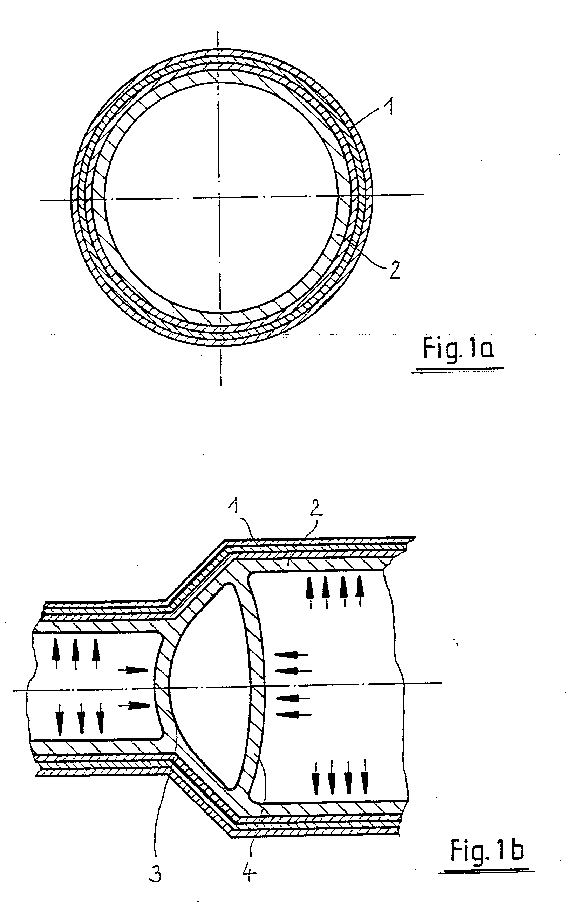

In Figur 1b sind die aus mehreren Schichten aufgebaute äußere Hülse 1, die darin eingesetzte innere Hülse 2 und zwei mit dieser einstückig verbundene Zwischenböden 3, 4 im Bereich von Querschnittssprüngen erkennbar. Die Zwischenböden 3, 4 sind so gewölbt, daß sie bei der durch Pfeile angedeuteten inneren Druckbeaufschlagung der inneren Hülse 2, zur Erzielung einer erhöhten Vorspannung in der Außenhülse 1, unter plastischer Umformung flachgedrückt werden.

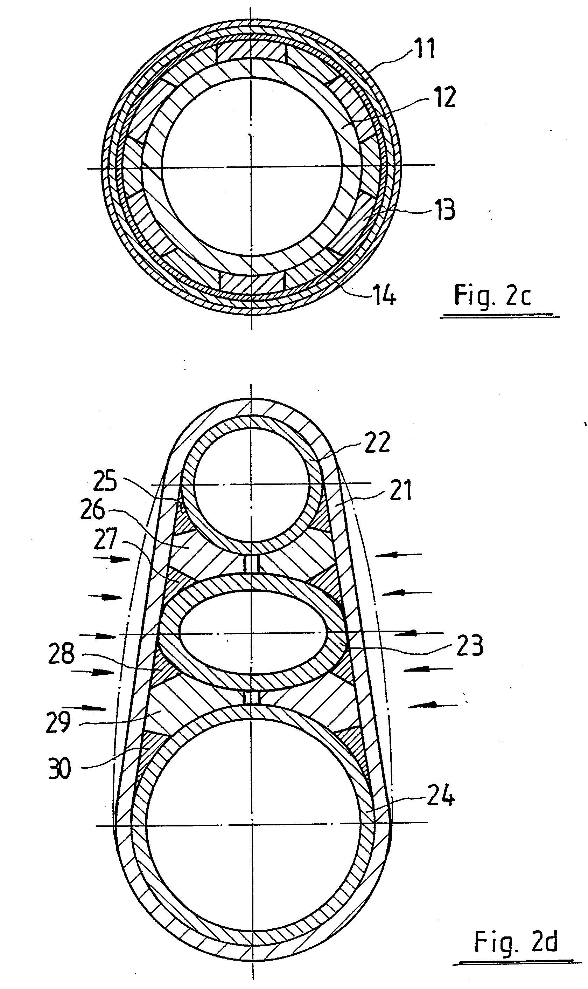

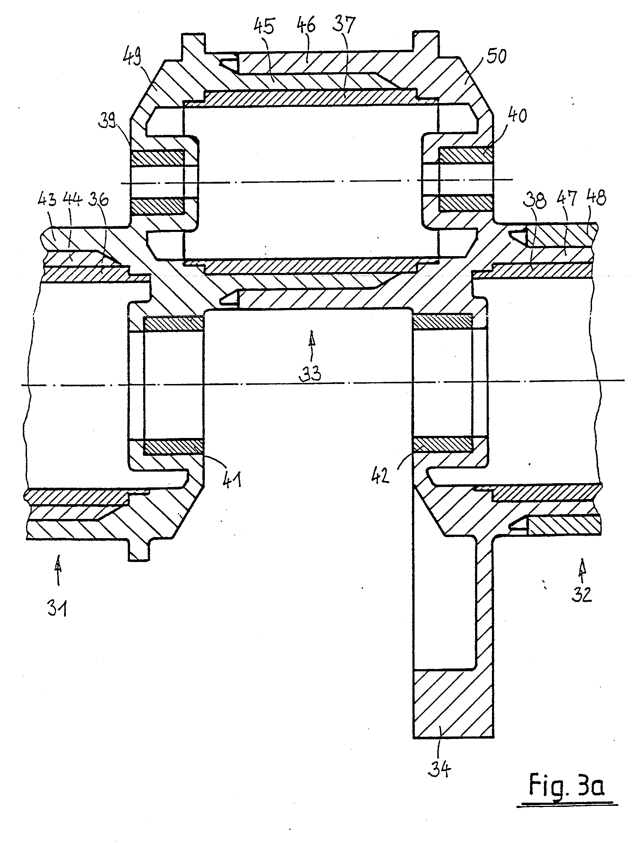

In den Figuren 2a und 2c ist ein runder Hohlkörper wiedergegeben, der die aus mehreren einzelnen Lagen bestehende Außenschicht 11 zeigt, wobei die einzelnen Lagen nicht näher bezeichnet sind. Mit Abstand hierzu ist eine innere Hülse 12 wiedergegeben, wobei zwischen den beiden Schichten mit in radialer Richtung keilförmigen Flächen versehene Stützkörper 13, 14 angeordnet sind. Diese können sich beim plastischen oder thermischen Umformen der Hülse 12 gegeneinander verschieben, während sie sich beim Rückfedern des rein elastisch aufgeweiteten Hülsenkörpes 11 gegeneinander verkeilen und damit an der Druckvorspannung teilhaben. In Fig. 2a ist die Situation vor dem Umformen der inneren Hülse 12 dargestellt, wobei die Stützkörper 13, 14 an den Kontaktflächen gegeneinander versetzt sind. In Fig. 2c ist die Situation nach dem Umformen der inneren Hülse 12 und einem radialen Verschieben der inneren Stützkörper 13 zwischen die äußeren Stützkörper 14 gezeigt, die in dieser Position die elastisch vorgespannte Außenschicht 11 auf einem vergrößerten Stützumfang in gegeneinander verkeilter Stellung festhalten. Die Innenhülse 12 kann kann thermisch unterkühlt eingesetzt werden oder nach dem spannungsfreien Einsetzen plastisch aufgeweitet werden.

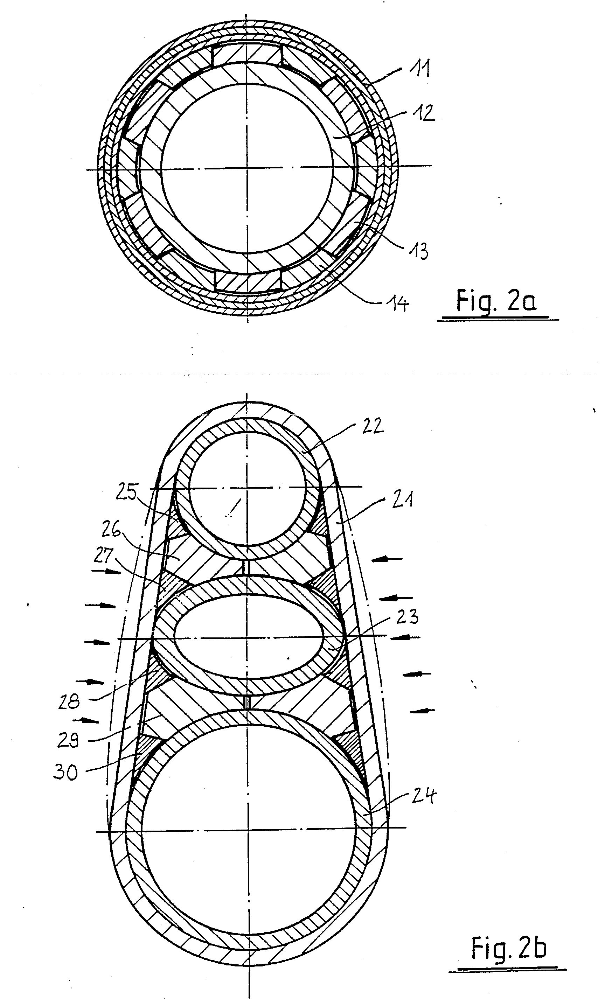

In den Figuren 2b und 2d ist ein Hohlkörper mit einer aus zwei Kreisbögen und zwei tangentialen Verbindungen bestehenden äußeren Schicht 21 und mehreren darin eingesetzten runden, beziehungsweise ovalen Hülsen 22, 23, 24 gezeigt, die zur Erzeugung einer elastischen Druckvorspannung in der äußeren Schicht 21 einer inneren Aufweitung und plastischen Verformung unterworfen worden sind. Jeweils zwischen zwei der Hülsen sind Stützkörper 25, 26, 27; 28, 29, 30 hoher Drucksteifigkeit (Keramik) eingesetzt, die der Druckübertragung von den nicht unmittelbar anliegenden Bereichen der Hülsenkörper auf die äußere Schicht 21 dienen und die sich beim plastischen oder thermischen Umformen der Hülsen 22, 23, 24 gegeneinander verschieben, während sie sich beim Rückfedern der rein elastisch aufgeweiteten äußeren Schicht 21 gegeneinander verkeilen und damit an der Druckvorspannung teilhaben. In Figur 2b ist die Situation vor dem Umformen der inneren Hülsen 22, 23, 24 dargestellt, wobei die Stützkörper an ihren Kontaktflächen gegeneinander abwechselnd nach innen und außen versetzt sind. In Figur 2d ist die Situation nach dem Umformen der inneren Hülsen 22, 23, 24 dargestellt, wobei die zunächst nach innen versetzten Stützkörper 26, 29 radial nach außen zwischen die übrigen Stützkörper 25, 27, 28, 30 verschoben sind, und die Stützkörper insgesamt die elastisch vorgespannte Außenschicht 21 auf einem vergrößerten Außenumfang in gegeneinander verkeilter Stellung festhalten. Die Innenhülsen können thermisch unterkühlt eingesetzt werden oder nach dem spannungsfreien Einsetzen mechanisch oder hydraulisch bis zur plastischen Verformung aufgeweitet werden.

Durch radiale Pfeile ist jeweils angedeutet, daß durch Gegenhalten ein Aufweiten nach Art der strichpunktierten dünnen Linie verhindert werden kann und die Außenschicht die gezeichnete Form, die sie von Beginn aufweist, auch später beibehält.

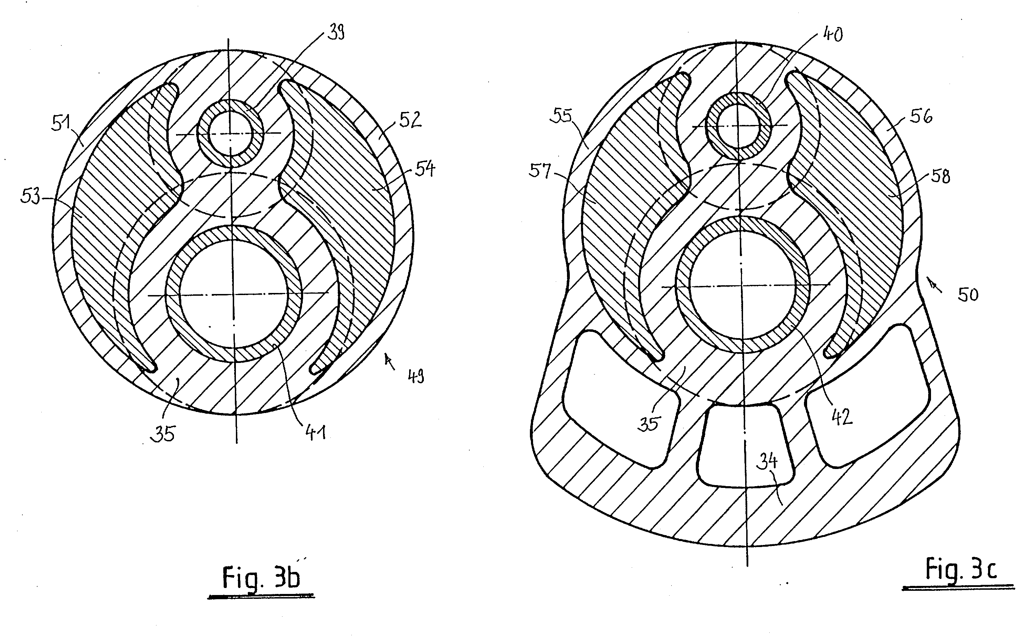

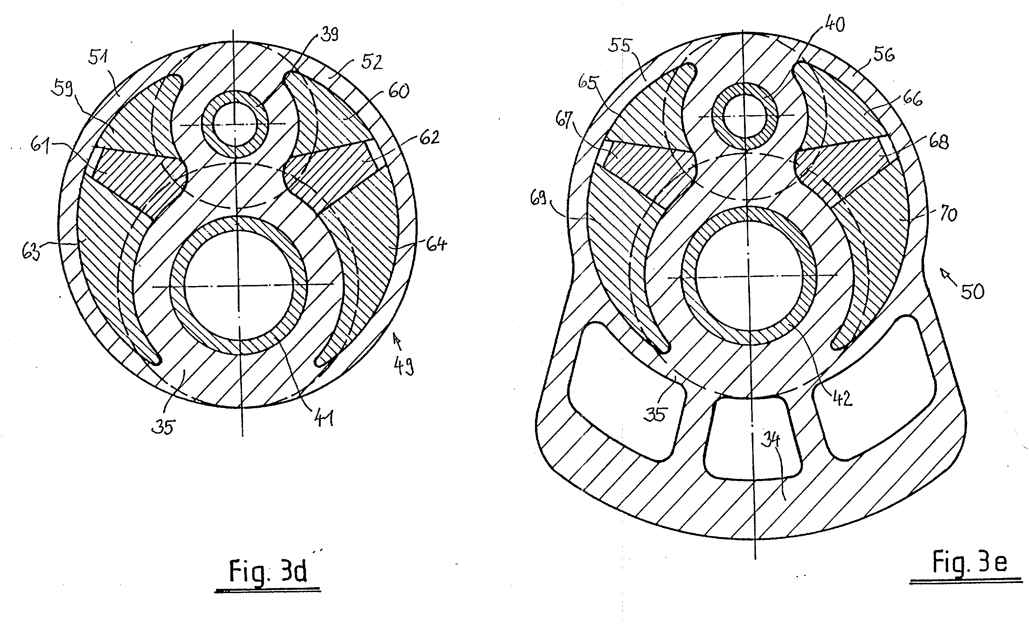

In Figur 3a ist ein Abschnitt einer Kurbelwelle dargestellt, der zwei Grundzapfen 31, 32 und einen Hubzapfen 33 aufweist. An einer Kurbelwange ist ein Gegengewicht 34 angeordnet. Die Kurbelwelle besteht aus einer äußeren Hülse 35 und darin eingesetzten inneren plastisch umgeformten Hülsen 36, 37, 38 im Bereich der Zapfen und 39, 40, 41, 42 im Bereich der Kurbelwangen. Die äußere Hülse 35 ist dabei jeweils aus ineinandergesteckten Zapfenteilen 43, 44; 45, 46; 47, 48 zusammgengesetzt, die wechselseitig an den Kurbelwangen 49, 50 ansetzen.

In Figur 3b ist die Kurbelwange 49 im schematisierten Querschnitt gezeigt, wobei der im Bereich der Wange etwa 8-förmige Außenkörper 35 erkennbar ist, der über Stege 51, 52 zu einer Ringform ergänzt ist. Zur Erzeugung der Zugvorspannung in dem 8-förmigen Außenkörper 35 sind die plastisch aufgeweiteten Hülsen 39 und 41 eingesetzt, sowie zur Erzeugung und Haltung der Vorspannung in den Stegen 51, 52 etwa mondsichelförmige Formkörper 53, 54.

In Figur 3c ist die Kurbelwange 50 im Querschnitt erkennbar, bei der an der etwa 8-förmigen Außenschicht 35 das Gegengewicht 34 angesetzt ist und die durch Stege 55, 56 teilweise zur Ringform ergänzt ist. Auch hier sind die plastisch aufgeweiteten Hülsen 40 und 42 im Schnitt dargestellt, sowie mondsichelförmige Formkörper 57, 58 zur Erzeugung einer gleichmäßigen Vorspannung in den Stegen 55, 56.

Die Formkörper sind in diesem Beispiel durch axiales Einpressen mit einer konischen Form und mit einem Selbsthemmung bewirkenden Winkel der konischen Flächen zur Erzeugung der Vorspannung in den Stegen 51, 52, 55, 56 eingesetzt.

In Figur 3d ist die Kurbelwange 49 in ähnlicher Darstellung wie in Figur 3b gezeigt. Es sind jedoch mehrteilige Klemmkörper 59, 60, 61; 62, 63, 64 gezeigt, die im Querschnitt keilförmige Form haben und zu einer Vorspannung in den Stegen 53, 54 beim Einsetzen führen.

In Figur 3e ist die Kurbelwange 50 in ähnlicher Darstellung wie in Fig. 3c gezeigt. Auch hier sind entsprechend Figur 3d mehrteilige Klemmkörper 65, 66, 67; 68, 69, 70 vorgesehen, die sich gegeneinander verschiebende Keilflächen haben, die Winkel im Bereich der Selbsthemmung haben.

Die Klemmkörper sind in axialer Richtung konisch bzw. keilförmig und haben auch im Querschnitt Keilform, wobei jeweils die Winkel im Bereich der Selbsthemmung liegen. Beim axialen Einpressen und ggfs. beim radialen Aufweiten der Hülsen 39, 40, 41, 42 verschieben sich die Klemmkörper gegeneinander und sind gegen ein Rückfedern durch die Selbsthemmung an ihren Gleitflächen gesichert, so daß sie eine Vorspannung in den Stegen 51, 52, 55, 56 erzeugen und aufrechterhalten.

## Patentansprüche

1. Verbundhohlkörper zur Aufnahme von Drehmomenten und/oder Zug-, Druck- oder Biegekräften, wobei in einer elastisch aufgeweiteten äußeren Materialschicht (21) durch plastische aufgeweitete und nach Entlastung des Aufweitdrucks in senkrechter Richtung zur Längsachse druckaufnehmende innere Stützmittel im wesentlichen über die gesamte axiale Länge eine jeweils über dem Umfang gleichmäßige Zugvorspannung in Umfangsrichtung herrscht und
mehrere an der äußeren Schicht (21) über Teilumfänge anliegende Ring- oder Hülsenkörper (22, 23, 24) in Verbindung mit dazwischenliegenden Formkörpern (25, 26, 27, 28) die Stützmittel bilden.

2. Verbundhohlkörper zur Aufnahme von Drehmomenten und/oder Zug-, Druck- oder Biegekräften, wobei in einer äußeren elastisch aufgeweiteten Materialschicht durch in senkrechter Richtung zur Längsachse druckaufnehmende innere Stützmittel im wesentlichen über die gesamte axiale Länge eine jeweils über dem Umfang gleichmäßige Zugvorspannung in Umfangsrichtung herrscht,
ein oder mehrere mit Abstand zur äußeren Schicht (11) unter Zwischenschaltung von sich gegeneinander abstützenden Klemmkörpern (13, 14) liegende Ring- oder Hülsenkörper (12) die Stützmittel bilden und die Klemmkörper die elastisch vorgespannte äußere Materialschicht durch Selbsthemmung in gegeneinander verkeitler Stellung festhalten.

3. Verbundhohlkörper nach Anspruch 1 oder 2, **dadurch gekennzeichnet**, daß die die Stützmittel bildenden Ring- oder Hülsenkörper (12, 22, 23, 24) aus plastisch in situ aufgeweitetem Material geringerer Streckgrenze als die äußere Schicht (11, 21) besteht.

4. Verbundhohlkörper nach einem der Ansprüche 1 bis 3, **dadurch gekennzeichnet,** daß in die Stützmittel aus dem Material geringerer Streckgrenze eingesetzte oder eingeformte Zwischenböden (3,4) zur zusätzlichen Abstützung vorgesehen sind.

5. Verbundhohlkörper nach einem der Ansprüche 1 bis 4, **gekennzeichnet durch** die Ausgestaltung als Kurbelwelle, Getriebewelle oder Nockenwelle.

6. Verbundhohlkörper nach einem der Ansprüche 1 bis 4, **gekennzeichnet durch** die Ausgestaltung als Pleuelstange.

## Claims

1. A composite hollow body for the absorption of torques and/or tensile, compressive or bending forces, wherein a tensile prestress, which is uniform over the periphery in each case, prevails in the peripheral direction substantially over the entire axial length in an elastically expanded outer material layer (21) due to plastically expanded inner supporting means which after the release of the expansion pressure are pressure-absorbing in a direction perpendicular to the longitudinal axis, and a plurality of ring or sleeve bodies (22, 23, 24), which are seated against the outer layer (21) over parts of the periphery, form the supporting means in combination with shaped bodies (25, 26, 27, 28) situated therebetween.

2. A composite hollow body for the adsorption of torques and/or tensile, compressive or bending forces, wherein a tensile prestress, which is uniform over the periphery in each case, prevails in the peripheral direction substantially over the entire axial length in an elastically expanded outer material layer due to inner supporting means which are pressure-absorbing in a direction perpendicular to the longitudinal axis, one or more ring or sleeve bodies (12), which are situated at a distance from the outer layer (11) with the interposition of mutually supporting clamping bodies (13, 14), form the supporting means, and the clamping bodies secure the elastically prestressed outer material layer by a self-locking action in a position in which they are wedged against each other.

3. A composite hollow body according to claim 1 or 2, characterised in that the ring or sleeve bodies forming the supporting means (12, 22, 23, 24) consist of a material which is plastically expanded in situ and which has a lower limit of elasticity than the outer layer (11, 21).

4. A composite hollow body according to any one of claims 1 to 3, characterised in that intermediate bases (3, 4) are provided for additional support, and are inserted or integrally formed in the supporting means comprising the material with the lower limit of elasticity.

5. A composite hollow body according to any one of claims 1 to 4, characterised by its construction as a crankshaft, gear shaft or camshaft.

6. A composite hollow body according to any one of claims 1 to 4, characterised by its construction as a connecting rod.

## Revendications

1. Corps creux composite pour l'absorption de couples de rotation et/ou de forces de traction, de pression ou de flexion, une précontrainte de traction uniforme respectivement sur la périphérie régnant en direction périphérique, essentiellement sur toute la longueur axiale, dans une couche de matière extérieure (21) étirée élastiquement par des moyens d'appui intérieur étirés plastiquement et, après soulagement de la pression d'étirage, absorbant la pression en direction orthogonale à l'axe longitudinal et plusieurs corps annulaires ou en forme de douilles (22, 23, 24) adjacents à la couche extérieure (21) sur des portions périphériques formant, en liaison avec des corps de forme (25, 26, 27, 28) disposés entre eux, les moyens d'appui.

2. Corps creux composite pour l'absorption de couples de rotation et/ou de forces de traction, de pression ou de flexion, une précontrainte de traction uniforme respectivement sur la périphérie régnant en direction périphérique, essentiellement sur toute la longueur axiale, dans une couche de matière extérieure étirée élastiquement par des moyens d'appui intérieur absorbant la pression en direction orthogonale à l'axe longitudinal, un ou plusieurs corps annulaires ou en forme de douilles (12) se trouvant à distance de la couche extérieure (11) formant, avec interposition de corps de serrage (13, 14) s'appuyant les uns contre les autres, les moyens d'appui et les corps de serrage maintenant la couche de matière extérieure précontrainte élastiquement par auto-arrêt en position de coincement les uns contre les autres.

3. Corps creux composite selon la revendication 1 ou 2, caractérisé en ce que les corps annulaires ou en forme de douilles (12, 22, 23, 24) formant les moyens d'appui sont constitués d'un matériau élargi plastiquement in situ de limite élastique inférieure à celle de la couche extérieure (11, 21).

4. Corps creux composite selon l'une des revendications 1 à 3,
caractérisé en ce que des corps intermédiaires (3, 4) rapportés ou formés en le matériau de limite élastique inférieure sont disposés dans les moyens d'appui pour un appui supplémentaire.

5. Corps creux composite selon l'une des revendications 1 à 4,
caractérisé par la réalisation sous forme de vilebrequin, d'arbre de transmission ou d'arbre à cames.

6. Corps creux composite selon l'une des revendications 1 à 4,
caractérisé par la réalisation sous forme de bielle.
